# EUROPEAN PATENT APPLICATION

(11) **EP 3 964 327 A1**
(43) Date of publication of application: **09.03.2022**
(21) Application number: 20822835.3
(22) Date of filing: 09.06.2020
(51) Int. Cl.: B23Q 11/08, B23Q 11/10, B23Q 17/00, B23Q 17/24

(54) **MACHINE TOOL**

(30) Priority: 12.06.2019 JP 2019109884
(71) Applicant: DMG Mori Co., Ltd., Yamatokoriyama-shi, Nara 639-1160 (JP)
(72) Inventor: NAKATSUKASA, Yosuke, Yamatokoriyama-shi, Nara 639-1160 (JP); YAMANE, Masahiro, Yamatokoriyama-shi, Nara 639-1160 (JP)
(74) Representative: Isarpatent
(86) International application number: PCT/JP2020/022724
(87) International publication number: WO 2020/250899

(57) **Abstract**

Provided is a machine tool comprising: a coolant release unit 20 that releases a coolant into a machining space M; a moving cover 4 that is movable between an open position where the machining space M is opened and a closed position where the machining space M is closed; and a servomotor 32 that moves the moving cover 4 to the open position or the closed position; and wherein a driving force of the servomotor 32 for moving the moving cover 4 in a direction of the closed position is changed according to a state of the coolant in the machining space M.

## Description

### Technical Field

The present disclosure relates to a machine tool that releases a coolant into a machining space.

### Background Art

In a machine tool, in many cases, a coolant (cutting liquid) is released into a machining space for suppressing friction in cutting, cooling, and the like. Such a machine tool is provided with a moving cover that closes a machining space in order to prevent scattering of a mist of a coolant, and opens and closes the closed machining space for taking in and out a workpiece or for inspection. Among machine tools including a moving cover, a machine tool that drives a moving cover using an air cylinder has been proposed (see Patent Literature 1). In the machine tool described in Patent Literature 1, the air cylinder is disposed on the upper side of the cover that closes the machining space, so that the width of the machine tool is reduced to attain a size reduction.

### Citation List

### Patent Literature

Patent Literature 1: JP 2019-69492 A

### Summary of Invention

### Technical Problem

However, in recent years, there is an increasing need to release a coolant at a high pressure. In such a case, a mist of the coolant may leak from the end portion of the moving cover to the outside only by a pressing force of the air cylinder. In particular, when the pressure at which the coolant is released fluctuates during machining, it is not sufficient only by the pressing force by the air cylinder, and the degree of sealing may be insufficient.

An object of the present disclosure is to provide a machine tool capable of reducing release of a mist of a coolant to the outside by adjusting the degree of sealing according to a state of the coolant in a machining space.

### Solution to Problem

In order to solve the above problem, provided is a machine tool according to CLAIMS. Advantageous Effects of Invention

According to this, by adjusting the degree of sealing according to the state of the coolant in the machining space, it is possible to provide the machine tool capable of reducing the release of the mist of the coolant to the outside.

### Brief Description of Drawings

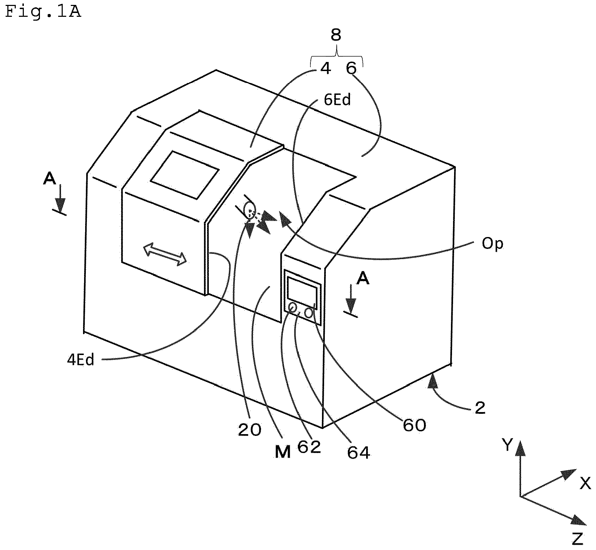

FIG. 1A is a perspective view schematically illustrating an example of a machine tool according to the present disclosure in which a closed machining space is opened and closed with one moving cover.

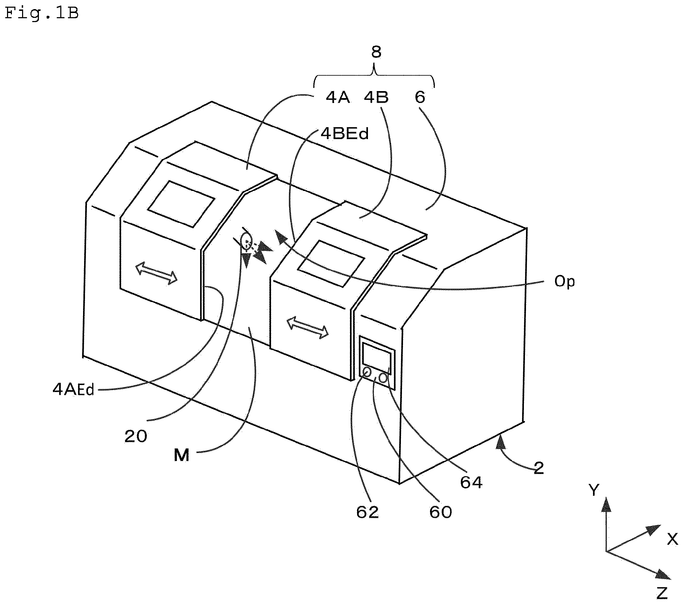

FIG. 1B is a perspective view schematically illustrating an example of the machine tool according to the present disclosure in which the closed machining space is opened and closed with two moving covers.

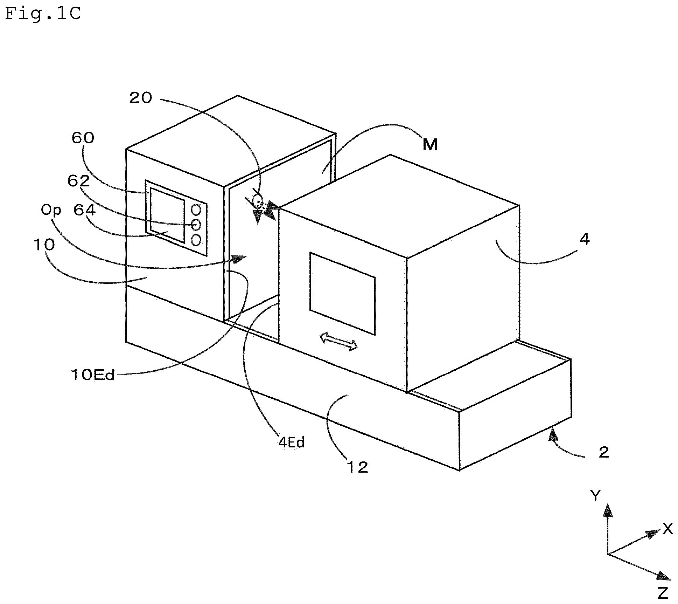

FIG. 1C is a perspective view schematically illustrating an example of the machine tool according to the present disclosure in which the machining space closed by a machine tool body portion and the moving cover is opened and closed by the moving cover.

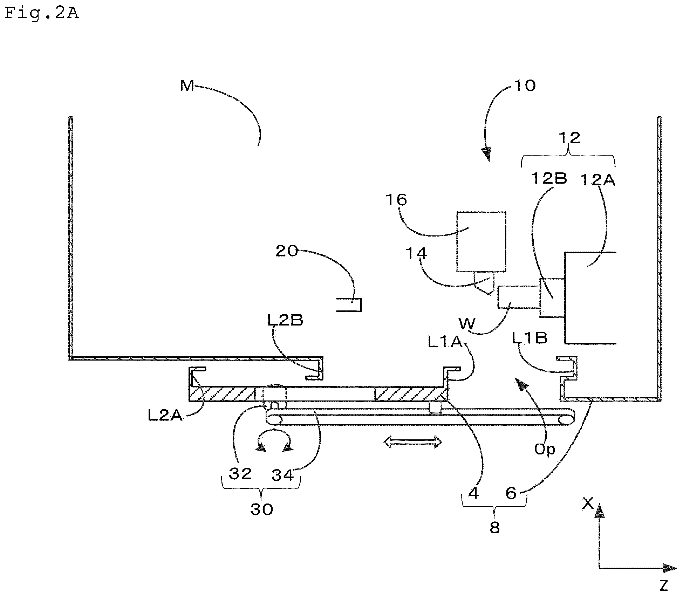

FIG. 2A is a view illustrating an A-A cross section of FIG. 1A and schematically illustrating a machine tool according to a first embodiment of the present disclosure in which the machining space is closed by labyrinth seal mechanisms, and particularly, is a plan cross-sectional view illustrating a state in the middle of opening and closing of the moving cover.

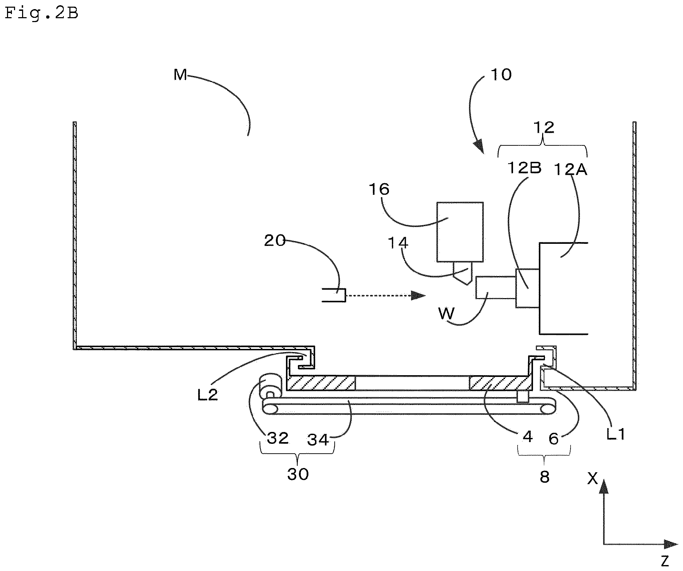

FIG. 2B is a view illustrating an A-A cross section of FIG. 1A and schematically illustrating the moving cover that closes the machining space by the labyrinth seal mechanisms and a moving mechanism of the moving cover, and particularly, is a plan cross-sectional view illustrating a state where the moving cover is at a closed position.

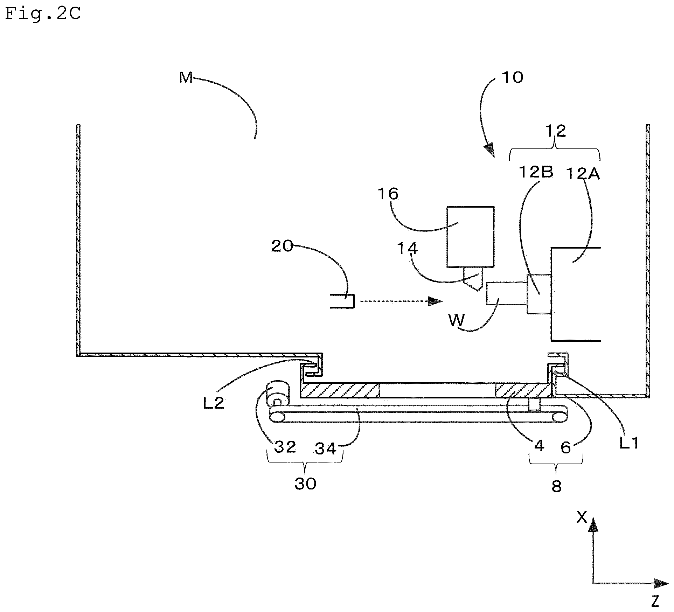

FIG. 2C is a view illustrating an A-A cross section of FIG. 1A and schematically illustrating a machine tool according to a second embodiment of the present disclosure in which the machining space is closed by contact between the moving cover and a fixing cover, and particularly, is a plan cross-sectional view illustrating a state where the moving cover is at a closed position.

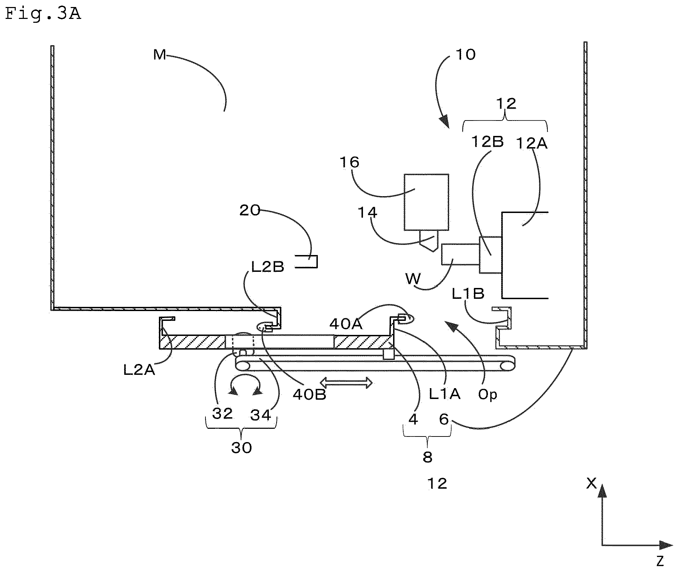

FIG. 3A is a view illustrating an A-A cross section of FIG. 1A and schematically illustrating a machine tool according to a third embodiment of the present disclosure in which the machining space is closed by the labyrinth seal mechanisms and the seal members, and particularly, is a plan cross-sectional view illustrating a state in the middle of opening and closing of the moving cover.

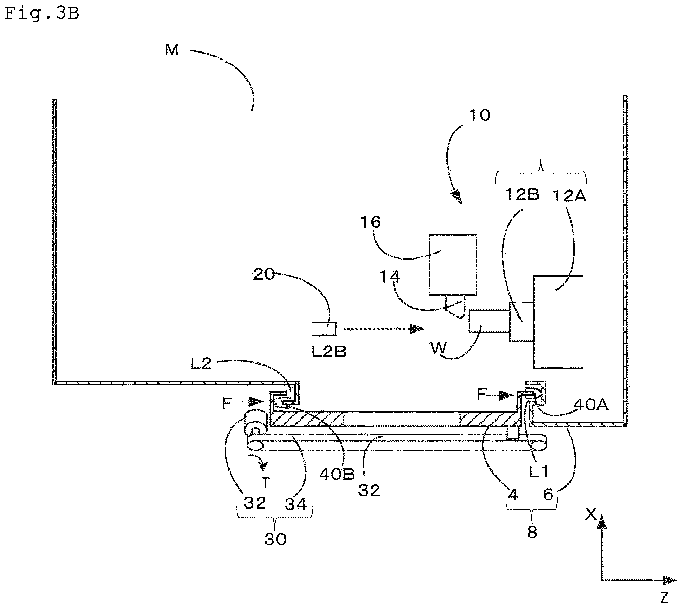

FIG. 3B is a view illustrating an A-A cross section of FIG. 1A and schematically illustrating the machine tool according to the third embodiment of the present disclosure in which the machining space is closed by the labyrinth seal mechanisms and the seal members, and particularly, is a plan cross-sectional view illustrating a state where the moving cover is at a closed position.

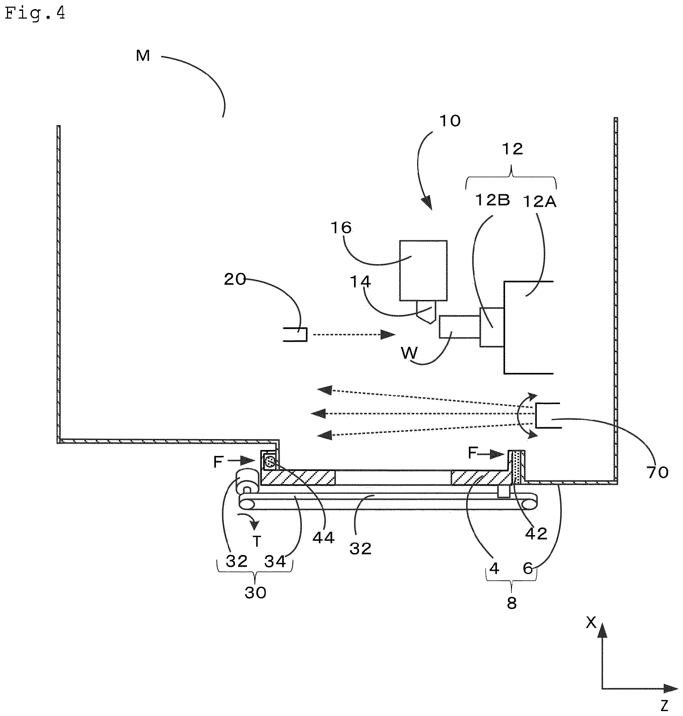

FIG. 4 is a view illustrating an A-A cross section of FIG. 1A and schematically illustrating a machine tool according to a fourth embodiment of the present disclosure in which the machining space is closed by the seal members, and particularly, is a plan cross-sectional view illustrating a state where the moving cover is at a closed position.

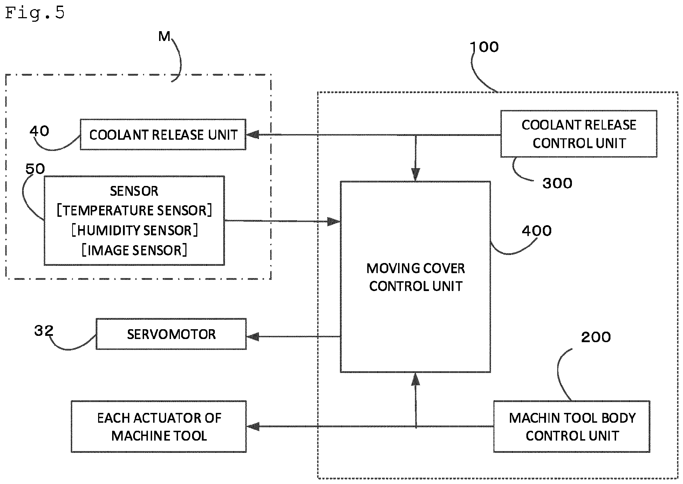

FIG. 5 is a block diagram illustrating an example of a control device including a moving cover control unit according to the present disclosure.

### Description of Embodiments

Hereinafter, embodiments for carrying out the present disclosure will be described with reference to the drawings. The embodiments described below are intended to embody the technical idea of the present disclosure, and the present disclosure is not limited to the following unless otherwise specified.

In the drawings, members having the same function may be denoted by the same reference numerals. In consideration of the description of the main points or ease of understanding, the embodiments may be illustrated separately for convenience, but partial replacement or combination of configurations illustrated in different embodiments is possible. In the embodiment to be described later, descriptions of matters common to the above-described embodiment will be omitted, and only different points will be described. In particular, the same operation and effect by the same configuration will not be sequentially mentioned for each embodiment. The sizes, positional relationships, and the like of the members illustrated in the drawings may be exaggerated for clarity of description.

In the drawings, an X axis, a Y axis, and a Z axis are illustrated. A moving direction of a moving cover is illustrated as a Z axis.

### (Machine Tool Including Moving Cover)

In a machine tool, in many cases, a coolant (cutting liquid) is released into a machining space for suppressing friction, cooling, or the like at the time of cutting a workpiece. In addition, in order to prevent scattering of a mist of the released coolant, the machining space is closed during cutting. Further, a moving cover that opens and closes the closed machining space for taking in and out a workpiece and for inspection is provided. Hereinafter, outlines of some examples of the machine tool according to the present disclosure including the moving cover will be described with reference to FIGS. 1A to 1C.

FIG. 1A is a perspective view schematically illustrating an example of the machine tool according to the present disclosure in which the closed machining space is opened and closed with one moving cover. FIG. 1B is a perspective view schematically illustrating an example of the machine tool according to the present disclosure in which the closed machining space is opened and closed with two moving covers. FIG. 1C is a perspective view schematically illustrating an example of the machine tool according to the present disclosure in which the machining space closed by the machine tool body portion and the moving cover is opened and closed by the moving cover.

In the machine tool illustrated in FIG. 1A, a machining space M is surrounded by a surrounding portion 8 including a moving cover 4 and a fixing cover 6. In the machining space M surrounded by the surrounding portion 8, a machine tool body portion and a coolant release unit 20 for releasing a coolant are disposed. An operation panel 60 including a machining start button 62 and a display device 64 is disposed on the surrounding portion 8. The moving cover 4 is movable between an open position where an opening portion Op is present in the surrounding portion 8 and a closed position where the opening portion Op is closed. The opening portion Op is formed in the surrounding portion 8 by moving the moving cover 4 to the minus side of the Z axis. The open position is not a single point, and the moving cover 4 can be moved to any position between the closed position and the fully open position at which the moving cover 4 is moved to the most minus side on the Z axis to be stopped. The size of the opening portion Op can be set to a desired size according to the workpiece to be taken in and out or the application. In FIG. 1A, the plus side of the Z axis is the right side of the drawing, and the minus side of the Z axis is the left side of the drawing.

When the moving cover 4 is at the closed position, the machining space M is closed, and scattering of the mist of the coolant can be suppressed. At this time, sealability between the end portions of the moving cover 4 on both sides in the Z axis direction and the corresponding opening end portions of the fixing cover 6 is important. In particular, it is important when the coolant is released at a high pressure or when the release pressure of the coolant fluctuates.

A machine tool 2 illustrated in FIG. 1B is different from the machine tool illustrated in FIG. 1A in that the machine tool 2 includes two moving covers that are a first moving cover 4A and a second moving cover 4B, which constitute biparting doors. The machining space M is surrounded by the surrounding portion 8 including the first moving cover 4A, the second moving cover 4B, and the fixing cover 6. In the machining space M surrounded by the surrounding portion 8, the machine tool body portion and the coolant release unit 20 for releasing a coolant are disposed.

When the first moving cover 4A is moved to the minus side on the Z axis and the second moving cover 4B is moved to the plus side on the Z axis, the opening portion Op is formed in the surrounding portion 8. That is, the first moving cover 4A and the second moving cover 4B move to the open positions. On the other hand, when the first moving cover 4A and the second moving cover 4B move from the open positions in the opposite direction to the above, the first moving cover 4A and the second moving cover 4B reach closed positions where the machining space M is closed.

When the first moving cover 4A and the second moving cover 4B are at the closed positions, the machining space M is closed, and scattering of the mist of the coolant can be suppressed. At this time, (a) sealability between the end portion of the first moving cover 4A on the plus side in the Z axis direction and the end portion of the second moving cover 4B on the minus side in the Z axis direction, (b) sealability between the end portion of the first moving cover 4A on the minus side in the Z axis direction and the corresponding opening end portion of the fixing cover 6, and (c) sealability between the end portion of the second moving cover 4B on the plus side in the Z axis direction and the corresponding opening end portion of the fixing cover 6 are important. In particular, it is important when the coolant is released at a high pressure or when the release pressure of the coolant fluctuates.

A machine tool 2 illustrated in FIG. 1C is different from the machine tools illustrated in FIGS. 1A and 1B in that the machining space M is surrounded by the moving cover 4 and a machine tool body portion 10. That is, it can be said that the surrounding portion 8 includes the moving cover 4 and the machine tool body portion 10. However, if the exterior of the machine tool body portion 10 is regarded as a fixing cover, it can be said that the machining space M is covered with the fixing cover and the moving cover. In the machining space M surrounded by the surrounding portion 8, the coolant release unit 20 for releasing a coolant is disposed.

The opening portion Op is formed in the surrounding portion 8 by moving the moving cover 4 to the plus side on the Z axis. That is, the moving cover 4 is moved to the open position. On the other hand, when the moving cover 4 is moved from the open position to the minus side in the Z axis direction, the moving cover 4 reaches the closed position where the machining space M is closed.

When the moving cover 4 is at the closed position, the machining space M is closed, and scattering of the mist of the coolant can be prevented. At this time, sealability between the end portion of the moving cover 4 and the end portion of the machine tool body portion 10 is important. In particular, it is important when the coolant is released at a high pressure or when the release pressure of the coolant fluctuates.

Regardless of the plus or minus direction on the Z axis, a direction in which the moving cover 4 is moved from the closed position to the open position may be referred to as a first direction, and a direction in which the moving cover 4 is moved from the open position to the closed position may be referred to as a second direction.

### (Machine Tool According to First Embodiment)

Next, with reference to FIGS. 2A and 2B, a machine tool according to a first embodiment of the present disclosure in which a machining space is closed by labyrinth seal mechanisms will be described. FIG. 2A is a view illustrating an A-A cross section of FIG. 1A and schematically illustrating the machine tool according to the first embodiment of the present disclosure in which the machining space is closed by the labyrinth seal mechanisms, and particularly, is a plan cross-sectional view illustrating a state in the middle of opening and closing of the moving cover. FIG. 2B is a view illustrating an A-A cross section of FIG. 1A and schematically illustrating the moving cover that closes the machining space by the labyrinth seal mechanisms and a moving mechanism of the moving cover, and particularly, is a plan cross-sectional view illustrating a state where the moving cover is at a closed position.

In the present embodiment, a case where a closed machining space as illustrated in FIG. 1A is opened and closed by one moving cover 4 will be described as an example. In the machine tool 2 according to the present embodiment, the machine tool body portion 10 and the machining space M are surrounded by the surrounding portion 8 including the moving cover 4 and the fixing cover 6.

As the machine tool body portion 10, any machining device, machining center, or turning center or the like that performs rolling or turning can be used. In the drawings, an example of the machine tool body portion 10 in a case where turning is performed is illustrated. Specifically, as the machine tool body portion 10, a workpiece holding unit 12 including a chuck 12A that detachably holds the workpiece W and a chuck fixing portion 12B to which the chuck 12A is attached, and a turret 16 to which a plurality of tools 14 are attached are illustrated.

The moving cover 4 is movable in a plus direction and a minus direction of the Z axis. If the fixing cover 6 in the region covering the machine tool body portion 10 is regarded as a part of the machine tool body portion 10, the machining space M can be regarded as being surrounded by the moving cover 4, the fixing cover 6, and the machine tool body portion 10.

A labyrinth constituent portion L1A having a substantially L shape is formed at an end portion of the moving cover 4 on the plus side in the Z axis direction. That is, the moving cover 4 as an example of the present embodiment has a configuration including the labyrinth constituent portion L1A. On the other hand, a labyrinth constituent portion L1B having a substantially U shape is formed at an opening end portion of the fixing cover 6 corresponding to the labyrinth constituent portion L1A. That is, the fixing cover 6 as an example of the present embodiment has a configuration including the labyrinth constituent portion L1B. When the moving cover 4 is located at the closed position (see FIG. 2B), the labyrinth seal mechanism L1 including the labyrinth constituent portion L1A on the moving cover 4 side and the labyrinth constituent portion L1B on the fixing cover 6 side seals between the moving cover 4 and the fixing cover 6. With such a configuration, even if the coolant is splashed, the coolant is prevented from being splashed out of the device of the machine tool from between the moving cover 4 and the fixing cover 6.

Similarly, a labyrinth constituent portion L2A having a substantially L shape is formed at an end portion of the moving cover 4 on the minus side in the Z axis direction. A labyrinth constituent portion L2B having a substantially U shape is formed at an opening end portion of the fixing cover 6 corresponding to the labyrinth constituent portion L2A. When the moving cover 4 is located at the closed position (see FIG. 2B), the labyrinth seal mechanism L2 including the labyrinth constituent portion L2A on the moving cover 4 side and the labyrinth constituent portion L2B on the fixing cover 6 side seals between the moving cover 4 and the fixing cover 6.

When the moving cover 4 is moved from the closed position (see FIG. 2B) to the minus side in the Z axis direction, the opening portion Op is generated in the surrounding portion 8 (see FIG. 2A). The size of the opening portion Op can be set to any size up to the maximum opening position according to the size of the workpiece to be taken in and out or a space required for inspection. FIG. 2A illustrates a state in the middle of opening and closing of the moving cover 4 (intermediate position), and the moving cover 4 may be moved to either the plus side or the minus side in the Z axis direction (see a white arrow in FIG. 2A). When the coolant is used and a large amount of mist still remains in a machining chamber, the moving cover 4 is moved to the intermediate position, the workpiece is replaced in a state where the opening of the surrounding portion 8 is small, and the moving cover is moved to the closed position after the replacement, so that the amount of mist coming outside can be reduced. In this case, a control unit of the machine tool transmits a control signal to a moving cover control unit to be described later so as to move the moving cover to the intermediate position between the fully open position and the closed position. When the fully open position is 100% and the closed position is 0%, the intermediate position can be optionally designated in a range of 30% to 80% according to the application.

In the present embodiment, a servomotor 32 is provided in a moving mechanism 30 that moves the moving cover 4. In the present embodiment, the moving mechanism 30 includes a belt mechanism 34 that is moved by a driving force of the servomotor 32. A lower portion of the moving cover 4 is engaged with a belt of the belt mechanism 34, and the belt mechanism 34 is moved based on rotation of a drive shaft of the servomotor 32, and accordingly, the moving cover 4 is moved in the plus and minus directions in the Z axis direction.

However, the moving mechanism is not limited to this, and any other moving mechanism including a moving mechanism including a ball screw driven by the servomotor 32 and a moving mechanism using a rack and pinion driven by the servomotor 32 can be used.

In addition, the servomotor 32 and the belt mechanism 34 may be provided in an upper portion of the machine tool. For example, those may be disposed at a position where a lead line of the fixing cover 6 of FIG. 1A is drawn. When those are disposed in an upper portion of the machine tool, the front-rear width of the machine tool can be shortened. For this reason, as illustrated in FIG. 1A, in a case where the workpiece is attached or replaced by a robot from the front of the machine tool, the operating distance of the robot can be shortened, so that the machining time can be shortened and the power can be reduced.

The machining space M can be closed by the labyrinth seal mechanisms L1 and L2 in a state where the moving cover 4 and the fixing cover 6 are not in contact with each other. This makes it possible to reduce leakage of the mist of the coolant released from the coolant release unit 20 into the machining space M to the outside.

Considering the sealability of the machining space M, particularly the sealability when the coolant is released at a high pressure from the coolant release unit 20, it is preferable to reduce the clearance between the moving cover 4 and the fixing cover 6 in the labyrinth seal mechanism. On the other hand, in consideration of dimensional accuracy of the members, aging of the members, loosening of the fastening portion due to long-term movement, and the like, it is preferable that a clearance of a certain size.

In the present embodiment, since the moving cover 4 is moved by the servomotor 32, the clearance between the moving cover 4 and the fixing cover 6 in the labyrinth seal mechanism can be accurately adjusted by the position control of the servomotor 32. For example, control processing can be performed such that, in a case where the release pressure of the coolant is relatively low, the clearance is defined large accordingly, and in a case where the release pressure of the coolant is relatively high, the clearance is narrowed. The size of the clearance can be controlled by controlling the position of the servomotor 32 according to not only the release pressure of the coolant but also the state of the coolant in the machining space M detected based on signals from a temperature sensor, a humidity sensor, an image sensor, and the like as described later. In addition, the driving force of the servomotor 32 for moving the moving cover 4 in the direction of the closed position can be changed according to the state of the coolant in the machining space M.

In the present embodiment, since the labyrinth seal mechanisms L1 and L2 are provided between the machine tool body portion 10 and the moving cover 4 at the closed position, the machining space M can be sealed in a non-contact state. In particular, when the servomotor 32 is used, it is possible to provide appropriate sealability according to the state of the coolant in the machining space M by the position control.

In the present embodiment, the case where the machining space M is surrounded by one moving cover 4 and the fixing cover 6 as illustrated in FIG. 1A has been described as an example, but the present invention is not limited thereto.

The same applies to the case where the machining space M is surrounded by the two moving covers 4A and 4B and the fixing cover 6 as illustrated in FIG. 1B. A labyrinth seal mechanism is provided between the end portion of the moving cover 4A on the plus side in the Z axis direction and the end portion of the moving cover 4B on the minus side in the Z axis direction, a labyrinth seal mechanism is provided at the end portion of the moving cover 4A on the minus side in the Z axis direction and the opening end portion of the fixing cover 6 corresponding thereto, and a labyrinth seal mechanism is provided at the end portion of the moving cover 4B on the plus side in the Z axis direction and the opening end portion of the fixing cover 6 corresponding thereto, whereby similar sealability can be obtained.

Further, the same applies to a case where the machining space M closed by the machine tool body portion 10 and the moving cover 4 is opened and closed by the moving cover 4 as illustrated in FIG. 1C. By providing a labyrinth seal mechanism between the end portion of the machine tool body portion 10 on the plus side in the Z axis direction and the end portion of the moving cover 4 on the minus side in the Z axis direction, it is possible to provide the same sealability.

### (Machine Tool According to Second Embodiment)

Next, with reference to FIG. 2C, a machine tool according to a second embodiment of the present disclosure in which the machining space is closed by the labyrinth seal mechanisms and seal members will be described. FIG. 2C is a view illustrating an A-A cross section of FIG. 1A and schematically illustrating the machine tool according to the second embodiment of the present disclosure in which the machining space is closed by contact between the moving cover and the fixing cover, and particularly, is a plan cross-sectional view illustrating a state where the moving cover is at a closed position.

FIG. 2C illustrates a state where the moving cover 4 and the fixing cover 6 are in contact with each other at the closed position. When the moving cover 4 is at the closed position, supply of drive current to the servomotor 32 is stopped. The machining start button 62 of the operation panel 60 as illustrated in FIG. 1A is pressed from the state where the driving current is stopped at the closed position to start machining, and supply of the driving current to the servomotor is started when the coolant is used. Even when the machining is finished, the driving current is supplied for a certain period of time, and the supply of the driving current is stopped after the certain period of time has elapsed.

As another aspect, when the moving cover is at the closed position in a state where machining is not performed, a small drive current that does not rotate the drive shaft of the servomotor 32 can be caused to flow. When the machining start button 62 of the operation panel 60 is pressed to start machining and the coolant is used, the driving current to the servomotor 32 is increased and the driving force of the servomotor 32 is increased. Even in this case, since the moving cover 4 and the fixing cover 6 are in contact with each other, the driving force (driving current) of the servomotor 32 is large, but the moving cover remains not moving.

On the other hand, when an external force of an inevitable force is applied to a handle of the moving cover 4, since the driving force of the servomotor 32 is increased, the moving cover 4 does not move or immediately starts to move to the closed position even if the moving cover 4 moves, and the sealability can be maintained.

### (Machine Tool According to Third Embodiment)

Next, with reference to FIGS. 3A and 3B, a machine tool according to a third embodiment of the present disclosure in which the machining space is closed by the labyrinth seal mechanisms and seal members will be described. FIG. 3A is a view illustrating an A-A cross section of FIG. 1A and schematically illustrating the machine tool according to the third embodiment of the present disclosure in which the machining space is closed by the labyrinth seal mechanisms and the seal members, and particularly, is a plan cross-sectional view illustrating a state in the middle of opening and closing of the moving cover. FIG. 3B is a view illustrating an A-A cross section of FIG. 1A and schematically illustrating the machine tool according to the third embodiment of the present disclosure in which the machining space is closed by the labyrinth seal mechanisms and the seal members, and particularly, is a plan cross-sectional view illustrating a state where the moving cover is at a closed position.

In the third embodiment, seal members 40A and 40B made of an elastic body are further disposed in the labyrinth seal mechanisms described in the first embodiment.

Specifically, the seal member 40A is attached to the labyrinth constituent portion L1A provided at the end portion of the moving cover 4 on the plus side in the Z axis direction. As a result, at the closed position illustrated in FIG. 3B, the end portion of the moving cover 4 on the Z axis plus side and the opening end portion of the fixing cover 6 corresponding thereto are in contact with each other via the seal member 40A.

Similarly, the seal member 40B is attached to the labyrinth constituent portion L2B of the fixing cover 6 corresponding to the end portion of the moving cover 4 on the minus side in the Z axis direction. As a result, at the closed position illustrated in FIG. 3B, the end portion of the moving cover 4 on the minus side in the Z axis direction and the opening end portion of the fixing cover 6 corresponding thereto are in contact with each other via the seal member 40B.

As a material of the seal members 40A and 40B, any known elastic material for a seal member including various rubbers and elastomers can be used.

In the present embodiment, at the closed position, a torque T generated by the servomotor 32 can apply a force F for moving the moving cover 4 in the direction of the closed position, that is, a compressive force F for pressing and compressing the seal members 40A and 40B. The torque T can be differently expressed as a driving force of the servomotor for moving the moving cover 4 in the direction of the closed position. Here, the "driving force for moving the moving cover 4 in the direction of the closed position" includes not only a case where the moving cover 4 is actually moved but also a static force that presses the seal members 40A and 40B.

As a result, in addition to the sealing function by the labyrinth seal mechanisms, the sealing function by the elastic reaction force of the seal members 40A and 40B can be added, and the sealability of the machining space M can be further enhanced. When the moving cover 4 illustrated in FIG. 3A is located at the open position, there is basically no difference from the first embodiment, and thus further description will be omitted.

In the present embodiment, the machining space M can be reliably sealed by the seal members 40A and 40B in addition to the labyrinth seal mechanisms L1 and L2. Therefore, even when the coolant is released from the coolant release unit 20 at a high pressure, it is possible to reduce leakage of the mist of the coolant to the outside.

During the machining of the workpiece by the machine tool body portion 10, the pressure at which the coolant is released may be changed according to the machining situation. Even in such a case, in the present embodiment, the driving force in the direction of the closed position of the servomotor 32 can be changed according to the release pressure of the coolant from the coolant release unit 20. That is, the moving mechanism 30 can change a pressing force F applied to the seal members 40A and 40B by the current value control of the servomotor 32.

For example, when the release pressure of the coolant is high, a large amount of mist is generated in the machining space M. Even in this case, the machining space M can be reliably sealed by increasing the pressing force F applied to the seal members 40A and 40B to increase the degree of sealing of the machining space M.

Not only the case where the pressing force F applied to the seal members 40A and 40B is changed by the current value control of the servomotor 32, but also the pressing force applied to the seal members 40A and 40B, which are elastic bodies, can be controlled by the position control of the servomotor 32. That is, by controlling the position of the servomotor 32, the crushing margin of the seal members 40A and 40B can be managed to control the elastic reaction force generated in the seal members 40A and 40B.

As described above, in the present embodiment, the moving mechanism 30 is provided with the servomotor 32, and the pressing force F applied to the seal members 40A and 40B can be controlled by the position control or the current value control of the servomotor 32. Therefore, by accurately adjusting the sealability according to the state of the coolant in the machining space M, it is possible to reduce the release of the mist of the coolant to the outside. The servomotor 32 can also be controlled using the position control and the current value control in combination.

In the above embodiment, the case where the moving mechanism 30 includes the servomotor 32 is described, but the present invention is not limited thereto. For example, the moving mechanism 30 may include a general-purpose DC electric motor together with a position sensor such as a linear scale. By the current value control of the DC electric motor, the pressing force F applied to the seal members 40A and 40B can be controlled. In addition, the crushing margin of the seal members can be managed by feedback control based on a signal from the position sensor to control the elastic reaction force generated in the seal members 40A and 40B.

In the present embodiment, the moving mechanism 30 includes the electric motor including a servomotor and a general-purpose DC motor. In a case where the electric motor outputs the driving force for moving the moving cover 4 in the first direction (minus direction in the Z axis direction in the drawing) from the closed position to the open position and the driving force for moving the moving cover 4 in the second direction (plus direction in the Z axis direction) from the open position to the closed position, the driving force output from the electric motor for moving the moving cover 4 in the second direction when the coolant is released from the coolant release unit 20 at a first pressure is larger than the driving force output from the electric motor for moving the moving cover 4 in the second direction when the coolant is released from the coolant release unit 20 at a second pressure lower than the first pressure.

As a result, even when the release pressure of the coolant is high and a large amount of mist is generated in the machining space M, the machining space M can be reliably sealed by increasing the pressing force F applied to the seal members 40A and 40B to increase the degree of sealing of the machining space M.

In addition to the electric motor, the moving mechanism 30 may include a hydraulic cylinder together with a position sensor such as a linear scale. In this case, the pressing force F applied to the seal members 40A and 40B can be controlled by controlling the hydraulic cylinder using a servo valve. In addition, the crushing margin of the seal members 40A and 40B can be managed by feedback control based on a signal from the position sensor to control the elastic reaction force generated in the members 40A and 40B.

The third embodiment can also be applied not only to the case where the machining space M is covered with one moving cover and the fixing cover as illustrated in FIG. 1A, but also to the case where the machining space M is covered with the two moving covers and the fixing cover as illustrated in FIG. 1B, and the case where the machining space is covered with the machine tool body portion and the moving cover as illustrated in FIG. 1C.

As described above, the machine tool 2 according to the third embodiment of the present disclosure includes the surrounding portion 8 that surrounds the machining space M in which the workpiece is processed, the coolant release unit 20 that releases the coolant into the machining space M, the moving cover 4 that constitutes at least a part of the surrounding portion 8 and is movable between the open position where the opening portion Op is present in the surrounding portion 8 and the closed position where the opening portion Op is closed via the seal members 40A and 40B made of an elastic body, and the moving mechanism 30 that moves the moving cover 4 to the open position or the closed position, and the moving mechanism 30 can change the pressing force applied to the seal members 40A and 40B according to the state of the coolant in the machining space M. In particular, when the moving mechanism 30 includes the servomotor 32, the driving force of the servomotor 32 for moving the moving cover 4 in the direction of the closed position can be changed according to the state of the coolant in the machining space M.

Here, the state of the coolant in the machining space M includes not only the release pressure of the coolant during machining but also the state of the mist of the coolant in the machining space M and an operation mode of the machine tool. Depending on the operation mode, the temperature in the machining space M rises, and the gas containing the mist expands and easily leaks to the outside. The operation mode also includes a stop state, and in this case, the pressing force applied to the seal members can be made zero.

### (Machine Tool According to Fourth Embodiment)

Next, a machine tool according to a fourth embodiment of the present disclosure will be described with reference to FIG. 4. FIG. 4 is a view illustrating an A-A cross section of FIG. 1A and schematically illustrating the machine tool according to the fourth embodiment of the present disclosure in which the machining space is closed by the seal members, and particularly, is a plan cross-sectional view illustrating a state where the moving cover is at a closed position.

The fourth embodiment is different from the third embodiment in that the labyrinth seal mechanisms are not provided, and the machining space M is closed by contact between the moving cover 4 and the fixing cover 6 via the seal members.

More specifically, the end portion of the moving cover 4 on the plus side in the Z axis direction and the opening end portion of the fixing cover 6 corresponding thereto are sealed by a packing 42 made of an elastic material. Similarly, the end portion of the moving cover 4 on the minus side in the Z axis direction and the opening end portion of the fixing cover 6 corresponding thereto are sealed by an O-ring 44 made of an elastic material.

Even in such a case, the degree of sealing of the machining space M can be adjusted by changing the pressing force applied to the seal members by the moving mechanism 30 according to the state of the coolant in the machining space M. When the moving mechanism 30 includes the servomotor 32, the degree of sealing of the machining space M can be adjusted by changing the driving force of the servomotor 32 for moving the moving cover 4 in the direction of the closed position according to the state of the coolant in the machining space M.

In the present embodiment, an air release unit 70 is provided in the machining space M in addition to the coolant release unit 20. Even when the opening portion Op is present in the surrounding portion 8, the mist of the coolant can be suppressed from flowing out to the outside by the air curtain function by the air released from the coolant release unit 20. In addition, in a state where the moving cover 4 is at the closed position, air can be released from the coolant release unit 20 to enhance the sealing function.

Furthermore, as indicated by arrows in FIG. 4, the air release unit 70 can also release air in a state of being rotatable left and right on a plane of the drawing. According to the state of the coolant in the machining space M, it is possible to perform adjustment such as releasing the air while fixing the air release unit 70 or releasing the air while swinging the air release unit 70 rightward and leftward.

Such an air release unit 70 can be applied in any of the above embodiments.

As described above, in the second or fourth embodiment of the present disclosure, the moving mechanism 30 can change the pressing force applied to the seal members 40A and 40B by the moving mechanism 30 according to the state of the coolant in the machining space M to adjust the sealability of the machining space M. In particular, when the moving mechanism 30 includes the servomotor 32, the sealability of the machining space M can be adjusted by changing the driving force of the servomotor 32 for moving the moving cover 4 in the direction of the closed position according to the state of the coolant in the machining space M.

As described above, by adjusting the degree of sealing according to the state of the coolant in the machining space M, it is possible to provide the machine tool 2 capable of reducing the release of the mist of the coolant to the outside.

### (Moving Cover Control Unit)

Next, an example of the moving cover control unit according to the present disclosure that controls the movement of the moving cover 4 will be described with reference to FIG. 5. FIG. 5 is a block diagram illustrating an example of a control device including the moving cover control unit according to the present disclosure.

In the example illustrated in FIG. 5, a case where a moving cover control unit 400 is included in a control unit 100 of the machine tool is illustrated. The control unit 100 includes a machine tool body control unit 200 that controls the machine tool body portion 10, a coolant release control unit 400 that controls the release of the coolant by the coolant release unit 20, and a moving cover control unit 400 that controls the movement of the moving cover 4. However, not only the moving cover control unit 400 may be included in the control device 100 of the machine tool, but also the moving cover control unit 400 may exist as an individual control device independent of the control device 100 of the machine tool.

The machine tool body control unit 200 controls the machine tool body portion 10 by transmitting a control signal to each activator of the machine tool body portion 10. The coolant release control unit 400 transmits a control signal to a pump or a solenoid valve provided in the coolant release unit 20 to perform control to release the coolant at a predetermined release pressure. The moving cover control unit 400 transmits a control signal to the servomotor 32 included in the moving mechanism 30 of the moving cover 4, and performs control processing of moving the moving cover 4 and pressing the seal member by the moving cover 4.

At least a part of the control signal transmitted from the machine tool body control unit 200 to each activator of the machine tool body portion 10 is also transmitted to the moving cover control unit 400. Similarly, at least a part of the control signal transmitted from the coolant release control unit 400 to the coolant release unit 20 is transmitted to the moving cover control unit 400.

The moving cover control unit 400 changes the pressing force applied to the seal member by the moving mechanism 30 based on the received control signal to the machine tool body portion 10 or the coolant release unit 20. When the moving mechanism 30 includes the servomotor 32, the moving cover control unit 400 changes the driving force in the direction of the closed position of the servomotor 32 based on the received control signal to the machine tool body portion 10 or the coolant release unit 20.

Depending on the operation mode of the machine tool body portion 10, the temperature in the machining space M rises, whereby the gas containing the mist of the coolant expands, so that the mist easily leaks to the outside. Even in the case of such an operation mode, the moving cover control unit 400 performs control processing of enhancing the pressing force of the seal member by the moving cover 4 based on the information of the control signal transmitted to the machine tool body portion 10, thereby being capable of enhancing the sealability and reducing the leakage of the mist to the outside.

On the other hand, in the operation mode in which the temperature in the machining space M does not rise much, the moving cover control unit 400 performs control processing of weakening the pressing force of the seal member by the moving cover 4. As a result, energy consumption can be suppressed, and consumption of the members can also be reduced.

When the coolant is released from the coolant release unit 20 at a high pressure, the amount of mist of the coolant increases, and the mist easily leaks to the outside. Even in such a case, the moving cover control unit 400 performs the control processing of enhancing the pressing force of the seal member by the moving cover 4 based on the information of the control signal transmitted to the coolant release unit 20, thereby being capable of enhancing the sealability and reducing the leakage of the mist to the outside.

On the other hand, when the release pressure of the coolant from the coolant release unit 20 is not too high, the moving cover control unit 400 performs the control processing of weakening the pressing force of the seal member by the moving cover 4. As a result, energy consumption can be suppressed, and consumption of the members can also be reduced.

As described above, the moving cover control unit 400 performs control processing of changing the pressing force applied to the seal member or changing the driving force in the direction of the closed position of the servomotor 32 in the case of including the servomotor 32, based on the control signal for the machine tool body portion 10 or the coolant release unit 20. As a result, it is possible to perform control processing according to the operation sequence of the machine tool body portion 10 and the coolant release unit 20, and thus, it is possible to appropriately control the degree of sealing of the machining space M according to the state in the machining space M.

Furthermore, a sensor 50 can be disposed in the machining space M surrounded by the surrounding portion 8, and a detection signal from the sensor 50 is transmitted to the moving cover control unit 400. The moving cover control unit 400 can control the moving mechanism 30 that moves the moving cover 4 based on the signal transmitted from the sensor 50. Examples of the sensor 50 include a temperature sensor, a humidity sensor, and an image sensor.

When it is detected by the temperature sensor that the temperature in the machining space M is high, it can be considered that the gas containing the mist of the coolant expands and the mist easily leaks to the outside. Therefore, the moving cover control unit 400 performs the control processing of enhancing the pressing force of the seal member by the moving cover 4, thereby being capable of enhancing the sealability and reducing the leakage of the mist to the outside. On the other hand, when it is detected by the temperature sensor that the temperature in the machining space M is not so high, it can be considered that the gas containing the mist of the coolant does not expand so much, and the mist is relatively less likely to leak to the outside. Therefore, the moving cover control unit 400 can weaken the pressing force of the seal member by the moving cover 4, suppress the energy consumption, and reduce the consumption of the members.

When it is detected by the humidity sensor that the humidity in the machining space M is high, it can be considered that the amount of mist of the coolant is large, and the mist easily leaks to the outside. Therefore, the moving cover control unit 400 performs the control processing of enhancing the pressing force of the seal member by the moving cover 4, thereby being capable of enhancing the sealability and reducing the leakage of the mist of the coolant to the outside. On the other hand, when the humidity sensor detects that the humidity in the machining space M is not so high, it can be considered that the amount of mist of the coolant is not large, and the mist is relatively less likely to leak to the outside. Therefore, the moving cover control unit 400 can weaken the pressing force of the seal member by the moving cover 4, suppress the energy consumption, and reduce the consumption of the members.

When the image in the machining space M is acquired by the image sensor, the amount of mist of the coolant in the machining space M can be calculated by image processing. By adjusting the pressing force of the seal member by the moving cover 4 according to the calculated amount of mist, the moving cover control unit 400 can perform appropriate control to reduce the leakage of the mist of the coolant to the outside, suppress the energy consumption, and reduce the consumption of the members.

As described above, the moving cover control unit 400 performs control processing of changing the pressing force applied to the seal member by the moving mechanism 30 based on a signal from the humidity sensor that detects the humidity in the machining space M, the temperature sensor that detects the temperature in the machining space M, or the image sensor that images the inside of the machining space M, or the moving cover control unit 400 performs control processing of changing the driving force in the direction of the closed position of the servomotor 32 in a case where the moving mechanism 30 includes the servomotor 32.

As described above, since the situation of the mist in the machining space is grasped based on the signal from the humidity sensor, the temperature sensor, or the image sensor, and control is performed according to the situation, it is possible to finely control the degree of sealing according to the state in the machining space M.

The moving cover control unit 400 can also change the pressing force applied to the seal member by the moving mechanism 30 by combining a control signal transmitted to the machine tool body portion 10 or the coolant release unit 20 and a detection signal from the sensor 50.

Although the embodiments and the aspects of the present disclosure have been described, the disclosure contents may be changed in details of the configurations, and combinations of elements, changes in order, and the like in the embodiments and the aspects can be realized without departing from the scope and spirit of the claimed present disclosure. Reference Signs List

- 2: machine tool
- 4, 4A, 4B: moving cover
- 6: fixing cover
- 8: surrounding portion
- 10: machine tool body portion
- 12: workpiece holding unit
- 12A: chuck
- 12B: chuck fixing portion
- 14: tool
- 16: turret
- 20: coolant release unit
- 30: moving mechanism
- 32: servomotor
- 34: belt mechanism
- 40A, 40B: seal member
- 42: seal member (packing)
- 44: seal member (O-ring)
- 50: sensor
- 60: operation panel
- 62: machining start button
- 64: display device
- 70: air release unit
- 100: control unit
- 200: machine tool body control unit
- 300: coolant release control unit
- 400: moving cover control unit
- M: machining space
- Op: opening portion
- L1, L2: labyrinth seal mechanism
- L1A, LIB, L2A, L2B: labyrinth constituent portion

## Claims

1. A machine tool comprising:
a coolant release unit that releases a coolant into a machining space;
a moving cover that is movable between an open position where the machining space is opened and a closed position where the machining space is closed; and
a servomotor that moves the moving cover to the open position or the closed position; and
wherein a driving force of the servomotor for moving the moving cover in a direction of the closed position is changed according to a state of the coolant in the machining space.

2. A machine tool comprising:
a surrounding portion that surrounds a machining space in which a workpiece is machined;
a coolant release unit that releases a coolant into the machining space;
a moving cover that constitutes at least a part of the surrounding portion and is movable between an open position where an opening portion is present in the surrounding portion and a closed position where the opening portion is closed via a seal member made of an elastic body; and
a moving mechanism that moves the moving cover to the open position or the closed position,
wherein the moving mechanism changes a pressing force applied to the seal member according to a state of the coolant in the machining space.

3. The machine tool according to claim 1 or 2, wherein the moving cover is provided with a labyrinth seal mechanism at the closed position.

4. The machine tool according to claim 1 or 2, wherein a driving force of the servomotor in a direction of the closed position is changed or a pressing force applied to the seal member by the moving mechanism is changed according to a release pressure of the coolant from the coolant release unit.

5. The machine tool according to claim 4,
wherein the moving mechanism includes an electric motor that outputs a driving force for moving the moving cover in a first direction from the closed position toward the open position and a driving force for moving the moving cover in a second direction from the open position toward the closed position, and
wherein the driving force output from the electric motor for moving the moving cover in the second direction when the coolant is released from the coolant release unit at a first pressure is larger than the driving force output from the electric motor for moving the moving cover in the second direction when the coolant is released from the coolant release unit at a second pressure lower than the first pressure.

6. The machine tool according to claim 2, wherein the moving mechanism includes a servomotor, and a pressing force applied to the seal member is controlled by position control or current value control of the servomotor.

7. The machine tool according to claim 1 or 2, wherein a driving force of the servomotor in a direction of the closed position is changed or a pressing force applied to the seal member by the moving mechanism is changed based on a control signal for the machine tool body portion or the coolant release unit.

8. The machine tool according to claim 1 or 2, wherein a driving force of the servomotor in a direction of the closed position is changed or a pressing force applied to the seal member by the moving mechanism is changed based on a signal from a humidity sensor that detects humidity in the machining space, a temperature sensor that detects temperature in the machining space, or an image sensor that images an inside of the machining space.
